**Europäisches Patentamt**

(19) **European Patent Office**

**Office européen des brevets**

(11) Veröffentlichungsnummer: **0 015 958**
**B1**

# (12) EUROPÄISCHE PATENTSCHRIFT

(45) Veröffentlichungstag der Patentschrift:
**09.11.83**

(51) Int. Cl.³: **F 16 L  47/02,** B 29 C  27/06

(21) Anmeldenummer: **79900439.5**

(22) Anmeldetag: **30.04.79**

(86) Internationale Anmeldenummer:
**PCT/CH  79/00060**

(87) Internationale Veröffentlichungsnummer:
**WO  79/01018  (29.11.79** Gazette **79/24)**

(54) **ELEKTRO-SCHWEISSMUFFE AUS THERMOPLASTICHEM MATERIAL.**

(30) Priorität: **02.05.78  CH 4760/78**

(43) Veröffentlichungstag der Anmeldung:
**01.10.80 Patentblatt 80/20**

(45) Bekanntmachung des Hinweises auf die Patenterteilung:
**09.11.83 Patentblatt 83/45**

(84) Benannte Vertragsstaaten:
**FR**

(56) Entgegenhaltungen:
**CH - A - 515 449**
**CH - A - 544 906**
**DE - A - 2 302 458**
**DE - C - 1 117 297**
**FR - A - 2 345 652**
**FR - A - 2 392 796**

(73) Patentinhaber: **STURM, Werner,**
**Allerheiligenstrasse 624, CH-4614 Hägendorf (CH)**
Patentinhaber: **VON ROLL AG, CH-4563 Gerlafingen**
**(CH)**

(72) Erfinder: **STURM, Werner, Allerheiligenstrasse 624,**
**CH-4614 Hägendorf (CH)**

(74) Vertreter: **Meyer, Reinhard, Dipl.-Ing., c/o Dr. A. R. EGLI**
**& CO Patentanwälte Postfach 473, CH-8034 Zürich (CH)**

Elektro-Schweißmuffe aus thermoplastischem Material

Die Erfindung betrifft eine Elektro-Schweißmuffe aus thermoplastischem Material zum Verbinden von thermoplastischen Leitungselementen mit einem hülsenförmigen, aus einem Rohrstück gebildeten Muffenkörper, an dessen Innenwand Windungen eines elektrischen Widerstandsheizdrahtes angeordnet sind, wobei die Windungen von einer gegenüber dem Muffenkörper vorspringenden Materialschicht abgedeckt sind.

Bei solchen Elektro-Schweißmuffen werden durch die elektrische Wärmeerzeugung im Widerstandsheizdraht das thermoplastische Material der Schweißmuffe und der von der Schweißmuffe überdeckten Enden der Leitungselemente im Bereich der einander benachbarten Flächenpartien zum Fließen gebracht und miteinander verschweißt. Damit können tropfdichte und auch druckdichte Verbindungen auf einfache Weise hergestellt werden.

Bei der Herstellung der Elektro-Schweißmuffe ist es erforderlich, im Hinblick auf die Tendenz zu höheren Arbeitsspannungen einen Berührungsschutz für den Widerstandsheizdraht vorzusehen. Bei einer bekannten Elektro-Schweißmuffe nach der CH-A-515 449 wird zunächst ein Muffenkörper mit einem an seiner Innenfläche angeordneten Widerstandsheizdraht hergestellt und anschließend der Widerstandsheizdraht mindestens teilweise mit einer Schutzschicht überdeckt. Abgesehen davon, daß die Herstellung dieser Schutzschicht eine zusätzliche Operation benötigt, ist anschließend eine Nacharbeit an den innenseitigen Rändern des Muffenkörpers erforderlich, insbesondere dann, wenn der Muffenkörper vor dem Aufbringen der Schutzschicht aufgeweitet wird.

Eine solche Nacharbeit ist auch bei einer Elektro-Schweißmuffe nach der DE-A-2 302 458 erforderlich, bei der die Elektro-Schweißmuffe, insbesondere bei größeren Rohrdurchmessern, aus einem Rohrabschnitt hergestellt wird, bei der der Widerstandsheizdraht unter gleichzeitiger Erwärmung und Aufweitung des Rohrabschnittes auf dessen gesamte Innenfläche aufgebracht wird.

Der Erfindung liegt die Aufgabe zugrunde, eine Elektro-Schweißmuffe der eingangs beschriebenen Art so auszugestalten, daß unter Erreichung eines ausreichenden Berührungsschutzes keine Nacharbeit an den innenseitigen Rändern des Muffenkörpers erforderlich ist.

Diese Aufgabe wird gemäß der Erfindung dadurch gelöst, daß die Windungen in zwei voneinander getrennten Zonen angeordnet sind, die entsprechende abdeckende Materialpartien aufweisen, wobei die Windungen der beiden Zonen durch einen Draht verbunden sind, der durch eine von den beiden Materialpartien getrennte Materialpartie abgedeckt ist.

Zur Herstellung der erfindungsgemäßen Elektro-Schweißmuffe dient erfindungsgemäß ein Verfahren mit den Verfahrensschritten

— Aufweiten eines Rohrstücks;
— Wickeln des Widerstandsheizdrahtes auf einen Dorn, dessen Außendurchmesser kleiner als der Innendurchmesser des aufgeweiteten Rohrstücks, vermindert um mindestens die doppelte Stärke des Widerstandsheizdrahtes, ist;
— Aufschieben des Rohrstücks auf den Dorn;
— Aufschrumpfen des Rohrstücks auf den Dorn in einem Raum mit erhöhter Temperatur;
— elektrische Wärmeerzeugung in dem Widerstandsheizdraht bis zum Fließen des Materials und Eindringen der Windungen in dasselbe und
— Abkühlen des Rohrstücks auf dem Wickeldorn und Abstoßen von demselben.

Die Erfindung ist anhand eines Ausführungsbeispiels in der Zeichnung dargestellt und nachfolgend beschrieben. Es zeigt

Fig. 1 einen Vertikalschnitt durch eine teilweise dargestellte Elektro-Schweißmuffe und zwei Enden von Leitungselementen,

Fig. 2 ein Detail der Elektro-Schweißmuffe nach Fig. 1 und

Fig. 3 eine Variante des Details der Elektro-Schweißmuffe nach Fig. 1.

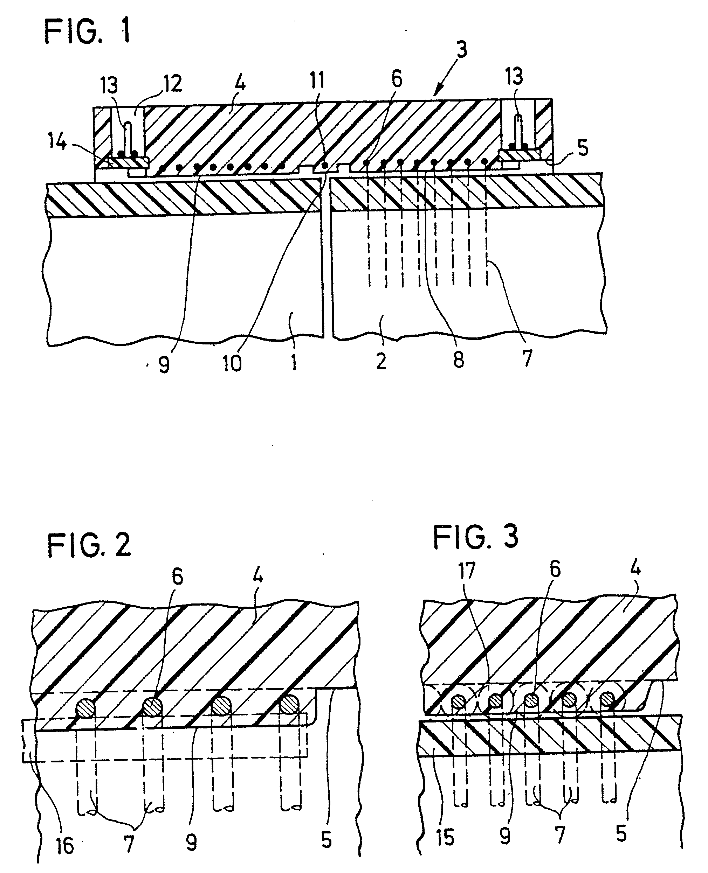

Die in Fig. 1 dargestellte Verbindung der Enden zweier Leitungselemente 1, 2, z. B. Rohrstücke, erfolgt mittels einer Elektro-Schweißmuffe 3, die sich etwa mit je einer Hälfte über die Enden der Leitungselemente 1, 2 erstreckt. Die Elektro-Schweißmuffe 3 weist einen aus einem thermoplastischen Material geformten Muffenkörper 4 auf, der z. B. ein von einem Rohr gleichbleibender Wandstärke abgetrenntes Rohrstück ist. An der Innenwand 5 des Muffenkörpers 4 ist ein elektrischer Widerstandsheizdraht 6 eingebettet, welcher in mit Abstand angeordneten Windungen 7, die nur schematisch dargestellt sind, verlegt ist. Die Windungen 7 sind in zwei voneinander getrennten Zonen verlegt, die sich durch eine, die Windungen 7 abdeckende und gegenüber der Innenwandung 5 vorstehende Materialpartie 8, 9 auszeichnen. Aus Fig. 1 ist ersichtlich, daß die vorstehenden Materialpartien 8, 9 sich nicht bis zum Rand des Muffenkörpers 4, sondern nur über den Bereich der Windungen 7 erstrecken. Eine weitere, jedoch schmale Materialpartie 10 ist zwischen den beiden Materialpartien 8, 9 vorgesehen, in welcher ein Verbindungsdraht 11 zur Verbindung der Windungen 7 der beiden Materialpartien 8, 9 liegt.

An den beiden Enden des Muffenkörpers 4 ist je eine Bohrung 12 zur Aufnahme eines Kontaktstiftes 13 vorgesehen, der in einer Halteplatte 14 befestigt ist. Die Halteplatte 14 ist im Grund der Bohrung 12 abgestützt und deckt den Anschluß des Widerstandsheizdrahtes 6 zum Kontaktstift 13 ab. Auf die Kontaktstifte 13 kann eine nicht dargestellte Buchse aufgeschoben und damit die Verbindung mit der Stromquelle zum Herstellen einer Schweißverbindung geschaffen werden.

Aus Fig. 1 ist ersichtlich, daß die Innenwandung 5 des Muffenkörpers 4 an den Rändern zurücksteht. Bei der Herstellung der Muffe aus einem Rohrstück ist es nicht zu vermeiden, daß die Enden sich etwas nach einwärts verformen. Durch die vorstehenden Materialpartien 8, 9 wird erreicht, daß die sonst erforderliche Nachbearbeitung der Innenwandung 5 an den Randpartien entfällt.

Die Herstellung der Elektro-Schweißmuffe 3 nach Fig. 1 wird anhand von Fig. 2 und 3 beschrieben. In der einfachsten Ausführungsform (Fig. 3) wird auf einen, z. B. aus einem Kunststoff, z. B. PTFE, hergestellten Wickeldorn 15 der Widerstandsheizdraht 6 mit einem bestimmten Abstand der Windungen 7 aufgewickelt. Der aus einem Rohrstück vorbereitete Muffenkörper 4 wird aufgeweitet, bis er über den Wickeldorn 15 mit dem aufgewickelten Widerstandsheizdraht 6 aufgeschoben werden kann. In einem Wärmeofen wird nun der Muffenkörper 4 auf den Wickeldorn 15 aufgeschrumpft, wobei er sich auf die Windungen 7 legt. Nun wird der Widerstandsheizdraht 6 an eine Stromquelle angeschlossen und in den Windungen 7 Wärme erzeugt, die die Innenwandung 5 zum Fließen bringt. Der Muffenkörper 4 schrumpft nun weiter, bis er am Wickeldorn 15 anliegt, während gleichzeitig der Widerstandsheizdraht 6 sich dehnt, so daß er vollständig vom Material des Muffenkörpers 4 umgeben wird. Der Widerstandsheizdraht 6 verdrängt Material, das die vorstehende Materialpartie 8 bzw. 9 bildet, die mindestens eine Stärke von etwa 0,1 mm aufweist, was bereits zur Vermeidung einer Nachbearbeitung an den Randpartien der Innenwandung 5 ausreicht. Nach dem Abkühlen wird der Wickeldorn 15 ausgestoßen, und die Elektro-Schweißmuffe ist verwendungsbereit.

Will man etwas stärkere Materialpartien 8, 9 erreichen, kann der Widerstandsheizdraht 6 auf eine in Fig. 2 gestrichelt dargestellte Kunststoffhülse 16 aufgewickelt werden. Das Aufschrumpfen des Muffenkörpers 4 erfolgt in der bereits beschriebenen Weise. Der Endzustand ist in Fig. 2 dargestellt: Die Kunststoffhülse 16 hat sich vollständig mit dem Muffenkörper 4 verbunden und bildet eine der vorstehenden Materialpartien 8, 9, in welcher die Windungen 7 eingebettet sind. Die Materialstärke über den Windungen 7 kann 0,5 mm und mehr betragen. Gegebenenfalls ist die Kunststoffhülse 16 mit dem aufgewickelten Widerstandsheizdraht 6 auf einen Stützdorn aufzuschieben, wenn die Hülse 16 nicht allein den Wickeldorn bilden kann.

Anstelle der Kunststoffhülse 16 kann auch ein kunststoffummantelter Widerstandsheizdraht 6 auf den Wickeldorn 15 aufgewickelt werden, siehe Fig. 3. Die Ummantelung 17 übernimmt anstelle der Kunststoffhülse 16 in Fig. 2 die Bildung der vorstehenden Materialpartie. Das Aufschrumpfen des Muffenkörpers 4 erfolgt in gleicher Weise.

Es ist auch möglich, den Wickeldorn 15 nach Aufwickeln des Widerstandsheizdrahtes 6 aufzuweiten, z. B. durch Erzeugung eines Innendrucks im Wickeldorn 15. Das Aufschrumpfen des Muffenkörpers 4 erfolgt in der beschriebenen Weise, jedoch wird während der Wärmeerzeugung in den Windungen 7 die Aufweitung langsam rückgängig gemacht, so daß das Material nachfließen und eine Materialpartie 8, 9 größerer Stärke bilden kann.

Wird für die Kunststoffhülse 16 (Fig. 2) und für die Ummantelung 17 (Fig. 3) dasselbe oder ein ähnliches Material wie für den Muffenkörper 4 verwendet, so entsteht ein gleichmäßiger zusammenhängender Körper, in dem die Windungen 7 vollständig abgedeckt eingebettet sind. Durch das beschriebene Verfahren wird die manuelle Nacharbeit im wesentlichen auf das Verbinden des Widerstandsheizdrahtes mit dem Kontaktstift 13 beschränkt.

**Patentansprüche**

1. Elektro-Schweißmuffe (3) aus thermoplastischem Material zum Verbinden von thermoplastischen Leitungselementen (1, 2) mit einem hülsenförmigen, aus einem Rohrstück gebildeten Muffenkörper (4), an dessen Innenwand Windungen (7) eines elektrischen Widerstandsheizdrahtes (6) angeordnet sind, wobei die Windungen (7) von einer gegenüber dem Muffenkörper (4) vorspringenden Materialschicht (8—10) abgedeckt sind, dadurch gekennzeichnet, daß die Windungen (7) in zwei voneinander getrennten Zonen angeordnet sind, die entsprechende abdeckende Materialpartien (8, 9) aufweisen, wobei die Windungen der beiden Zonen durch einen Draht (11) verbunden sind, der durch eine von den beiden Materialpartien (8, 9) getrennte Materialpartie (10) abgedeckt ist.

2. Muffe nach Anspruch 1, dadurch gekennzeichnet, daß die Materialpartien (8, 9) aus einem mit den Windungen (7) auf die Innenwandung (5) des Rohrstücks (4) aufgebrachten Material bestehen.

3. Muffe nach Anspruch 1, dadurch gekennzeichnet, daß die Materialpartien (8, 9) aus Material des Rohrstücks (4) besteht.

4. Verfahren zur Herstellung der Elektro-Schweißmuffe nach einem der Ansprüche 1 bis 3, gekennzeichnet durch die Schritte:

— Aufweiten eines Rohrstücks;
— Wickeln des Widerstandsheizdrahtes auf einen Dorn, dessen Außendurchmesser kleiner als der Innendurchmesser des aufgeweiteten Rohrstücks, vermindert um mindestens die doppelte Stärke des Widerstandsheizdrahtes, ist;

— Aufschieben des Rohrstücks auf den Dorn;
— Aufschrumpfen des Rohrstücks auf den Dorn in einem Raum mit erhöhter Temperatur;
— elektrische Wärmeerzeugung in dem Widerstandsheizdraht bis zum Fließen des Materials in dessen Umgebung und Eindringen der Windungen in das Material; und
— Abkühlen des Rohrstücks auf dem Dorn und Abstoßen von demselben.

5. Verfahren nach Anspruch 4, dadurch gekennzeichnet, daß der Durchmesser des Dorns nach dem Aufwickeln des Widerstandsheizdrahtes aufgeweitet und während des Fließens des Materials aufgrund der elektrischen Wärmeerzeugung verkleinert wird.

6. Verfahren nach Anspruch 4 oder 5, dadurch gekennzeichnet, daß der Widerstandsheizdraht auf einer nichtleitenden, z. B. aus Kunststoff geformten Hülse aufgewickelt wird, wobei letztere mit dem Rohrstück verschweißt und zusammen mit dem Rohrstück vom Dorn abgestoßen wird.

**Claims**

1. Electric welding muff (3) made from thermoplastic material for joining thermoplastic line elements (1, 2) having a sleeve-shaped muff body (4) formed of a pipe length and having arranged on its inner wall the turns (7) off an electric resistance heating wire (6), whereby the turns (7) are covered by a material portion (8—10) projecting with respect to the muff body (4) characterised in that the turns (7) are arranged in two separate areas, which have corresponding covering material portions (8, 9) whereby the turns of the both areas are connected by a wire (11), which is covered by a material portion (10) separate from the both material portions (8, 9).

2. Muff according to claims 1, characterised in that the material portions (8, 9) comprise a material applied to the inner wall (5) of the pipe length (4) with the turns (7).

3. Muff according to claim 1, characterised in that the material portions (8, 9) are made from the material of the pipe length (4).

4. Method of making the electric welding muff according to one of claims 1 to 2 characterised by the steps:

— expanding a pipe length;
— winding the resistance heating wire onto a mandrel whose external diameter is smaller than the internal diameter of the widened pipe length, reduced by at least double the thickness of the resistance heatin wire;
— placing the expanded pipe length on the mandrel;
— shrink fitting the pipe length onto the mandrel in a zone at elevated temperature;
— electrical heat production in the resistance heating wire until the material flows at its surrondings and the turns penetrate in the material; and
— cooling the pipe length on the mandrel ans removing the pipe length from the mandrel.

5. Method according to claim 4, characterised in that the diameter of the mandrel is expanded after winding on the resistance heating wire ans is reduced during the material flow by elektrical heat production.

6. Method according to claim 4 or 5 characterised in that the resistance heat wire is wound onto a non-condutive mandrel, e.g. made from plastic, whereby the latter is welded to the pipe length and is removed together with the pipe length from the mandrel.

**Revendications**

1. Manchon à souder (3) en matière thermoplastique pour la liaison d'éléments de conduite thermoplastiques (1, 2), comportant un corps de manchon (4) en forme de douille, qui est formé à partir d'un morceau de tuyau et sur la paroi inférieure duquel sont disposées des spires (7) d'un fil de résistance chauffante (6), les spires (7) étant recouvertes par une couche de matière (8—10) saillante par rapport au corps de manchon (4), caractérisé en ce que les spires (7) sont disposées dans deux zones séparées l'une de l'autre, qui comportent des parties de matière correspondantes (8, 9) couvrantes, les spires des deux zones étant reliées par un fil métallique (11), qui est recouvert par une partie de matière (10) séparant les deux parties de matière (8, 9).

2. Manchon suivant la revendication 1, caractérisé en ce que les parties de matière (8, 9) sont constituées par une matière appliquée, avec les spires (7), sur la paroi intérieure (5) du morceau de tuyau (4).

3. Manchon suivant la revendication 1, caractérisé en ce que les parties de matière (8, 9) sont de la même matière que le morceau de tuyau (4).

4. Procédé pour la farbrication du manchon à souder, suivant l'une des revendications 1 à 3, caractérisé par les opérations consistant à produire un:

— élargissement d'un morceau de tuyau;
— enroulement du fil de résistance chauffante sur un mandrin, dont le diamètre extérieur est inférieur au diamètre intérieur du morceau de tuyau élargi, diminué d'au moins la double épaisseur du fil de résistance chauffante;
— Emmanchement du morceau de tuyau sur le mandrin;
— frettage du morceau de tuyau sur le mandrin, dans un local à température élevée;
— chauffage électrique du fil de résistance chauffante, jusqu'à ce que la matière devienne liquide prés de lui et que les spires pénètrent dans la matière; enfin

— refroidissement du morceau de tuyau sur le mandrin et éjection de ce dernire.

5. Procédé suivant la revendication 4, caractérisé en ce que le diamètre du mandrin est élargi après l'enroulement du fil de résistance chauffante et rétréci pendant la liquéfaction de la matière par suite du chauffage électrique.

6. Procédé suivant l'une des revendications 4 ou 5, caractérisé en ce que le fil de résistance chauffante est enroulé sur une douille non conductrice, qui est par exemple moulée à partir d'une matière plastique, cette douille étant soundée au morceau de tuyau et éjectée, avec lui, du mandrin.

## FIG. 1

## FIG. 2

## FIG. 3